# EUROPEAN PATENT APPLICATION

(11) **EP 3 339 026 A1**
(43) Date of publication of application: **27.06.2018**
(21) Application number: 18155540.0
(22) Date of filing: 12.02.2015
(51) Int. Cl.: B32B 37/02, B32B 7/12, B32B 27/08, C09J 4/00

(54) **AN ADHESIVE INK COMPOSITION**

(30) Priority: 12.02.2014 US 201461939077 P
(62) Divisional of application: 15749289.3
(71) Applicant: Energy Sciences Inc., Wilmington, Massachusetts 01887 (US); Technosolutions Assessoria Ltda., 06454-040 Barueri - SP (BR)
(72) Inventor: PADUAN, Wilson A., 04019-000 Sao Paulo (BR); RANGWALLA, Imtiaz, Andover, MA 01810 (US)
(74) Representative: v. Bezold & Partner Patentanwälte - PartG mbB

(57) **Abstract**

The present application relates to methods of manufacturing a laminate comprising coating at least a portion of at least a first substrate with a last down energy-curable adhesive ink; applying at least a second substrate to the coated portion of the first substrate to form a laminate; and curing the laminate. The present application further relates to adhesive ink compositions comprising at least one acrylate monomer, at least one pigment, at least one wetting agent, and at least one dispersing agent.

## Description

Laminates for manufacturing pouch-type forms of packaging for foods like salty snacks, meats and cheese, even for non-food like detergents, fabric softener, etc. are made by laminating two films together. Usually the top film is reverse-printed and subsequently laminated to a similar or dissimilar film. A non-exhaustive list of examples of conventional laminate structures used in packaging includes:
- BOPP/ reverse printed /adhesive / metallized BOPP heat sealable (a typical laminate structure for salty snacks);
- PET/ reverse printed / adhesive / high barrier sealant film (a typical structure for certain processed meats & cheese);
- PE / reverse printed / adhesive / sealant PE film (a typical structure detergents); and
- BOPP / reverse print / adhesive / BOPP (a typical structure for bottle labels)

The typical steps involved in printing and laminating include reverse-printing of a clear primary film, lamination of the primary film to a secondary film, curing during any and/or all steps. The laminate may further be subjected to optional post-processing steps such as slitting, product filling, etc.

The first step involves reverse printing of a clear primary film. For example, this could be any of the films described in the above examples. The film may be printed using printing methods including: (a) solvent or water based CI-Flexography, where thermal dryers dry tile ink; (b) UV cure stack flexography, where UV cures the ink; (c) water based stack flexography, where thermal dryers dry the ink; (d) solvent or water based gravure printing, where thermal dryers dry the ink; (e) UV or EB cured offset printing, where UV or EB cures the ink; and (f) thermally cured digital printing (for example HP indigo).

It is common to use a last down white ink layer (also referred herein as "last white," "last down white" or "white"), which is applied after all the colors or other ink layers have been applied, and commonly referred to as the last ink deck. The function of the white ink layer is to provide good opacity for aesthetics and to act as a light barrier in cases where a clear film is used as a secondary film. This white ink layer is usually flood coated to provide full coverage of the prior surface (ink(s)). However, it is quite common to have small windows in the package so that one can see tile packaged product In these instances, the white layer may be pattern coated. The white ink could be solvent or water based, in which case a thermal dryer is used. Alternatively, the white ink layer could be UV or EB cured with appropriate curing equipment.

In a separate, second step, the printed primary film is laminated to the secondary film with an adhesive using laminating equipment, e.g., laminators. Examples of laminating adhesives include (a) solventless adhesives (for example polyurethane-type adhesives available as a two-part system, such as Henkel Liofol LA7773-21/LA6016-21 solvent less adhesive); (b) solvent-based adhesives (for example this could be a one-part system or two-part system); and (c) water-based adhesives.

Adhesives (b) and (c) require the use of a thermal dryer, while adhesive (a) does not require a thermal dryer. Adhesives (b) and (c) can be applied by gravure or flexo methods, but adhesive (a) requires a special three-roll coater for application. These specific adhesive application methods are generally available on the laminating equipment. Moreover, these adhesives are each considered time cured adhesives. Thus, depending on the end use requirements and type of adhesive selected, the time to cure can vary anywhere from about 24 hours to about ten (1 0) days. During this cure time, the adhesive must be kept in a controlled environment to ensure proper bonding of the laminates.

After curing, the laminate is ready for other optional operational steps such as slitting, product filling, etc.

The development of laminates has evolved over time. For example, there was a market need to achieve instantaneous bond from these laminate adhesives to permit instantaneous post processing steps and therefore shorter turn-around times demanded by the market. Energy cured UV or EB adhesives addressed these needs. Several examples of instant cure EB adhesives are disclosed in U.S. Patent Application Publication Nos. 2003/0031865; 2006/003123; 2006/000312; and 2006/0000545, and in U.S. Patent No. 8,163,127. EB was chosen because of its capability to penetrate opaque films to cure the adhesive, and for easier compliance with food law regulations.

There was also a market need to develop an instantaneously cured barrier adhesive. This barrier adhesive, besides providing excellent instantaneous bonds, also had to provide the excellent oxygen and aroma barriers required for certain packaging applications. This technology is disclosed in various patents including U.S. Patent Nos. 6,399,171; 6,514,584; 6,436,498; 6,416,817; and 7,026,635.

The currently known lamination technology, however, continues to have technological limitations and cost inefficiencies that need to be addressed.

For example, all the primary substrates described above that contain the last down white ink layer need to be laminated to a secondary film, which requires using a separate piece of laminating equipment and, as noted, a laminating adhesive. This requires extra equipment and materials.

Various EB suitable organo-functional gelflex inks are described in U.S. Patent Application Publication Nos. 2013/0192483; 2012/0220683; and 2011/024 7508. Such inks, for example, can be cured with EB at a dose of about 30 to about 35 kGy and about 110 kV of electron energy. In some embodiments, the last down white was applied to the initial ink layers, which were then all cured together by electron beam. As noted above, however, this cured substrate must then be laminated to another substrate at a separate lamination station using a separate adhesive material to bond tile layers together" A more cost efficient and technological advanced solution is needed.

In one embodiment, the inventors of the present application considered a more efficient process by incorporating EB curable laminating adhesive capability into the last down white ink layer of the printed primary film substrate then laminating the primary film substrate to the secondary film substrate, and finally curing the entire laminated structure with one electron beam processing step. Such a process is more streamlined, requires less equipment and requires fewer curing steps.

To the surprise of tile inventors, such an approach worked and was unexpected. Regarding a EB curable last down white layer, it was unexpected that having a higher pigment loading of the ink to achieve the desired viscosity and selecting EB appropriate curable ingredients, produced an ink that when cured created the appropriate adhesion between the substrates and the desired overall cohesiveness of the final product.

The following examples are merely illustrative, and should not be construed as limiting the present disclosure.

### Example 1 - Formulation (EB and UV) of last down white laminating adhesive

**EB formulation:**

| **Product** | **Description** | **Suplier** | **%** |
|---|---|---|---|
| Omnistab IN 535 | Stabilizer | IGM Resins | 0.5 |
| TegoGlide 432 | Wetting Agent | Evonik | 1.0 |
| TegoDispers685 | Dispersing Agent | Evonik | 0.5 |
| TMPTA | Acrylate Monomer | Sartomer | 12.0 |
| TMP(3EO)TA | Acrylate Monomer | Sartomer | 18.0 |
| NPG(2PO)TA | Acrylate Monomer | Sartomer | 18.0 |
| Titanium Dioxide R 902 | Pigment | DuPont | 50.0 |

**UV formulation:**

| **Product** | **Description** | **Suplier** | **%** |
|---|---|---|---|
| Omnistab IN 535 | Stabilizer | IGM Resins | 0.47 |
| TegoGlide 432 | Wetting Agent | Evonik | 0.94 |
| TegoDispers685 | Dispersing Agent | Evonik | 0.47 |
| TMPTA | Acrylate Monomer | Sartomer | 11.28 |
| TMP(3EO)TA | Acrylate Monomer | Sartomer | 16.92 |
| NPG(2PO)TA | Acrylate Monomer | Sartomer | 16.92 |
| Titanium Dioxide R 902 | Pigment | DuPont | 47.00 |
| Speedcure TPO-L | Photoinitiator | Lambson | 6.00 |

### Example 2

Primary Film: Reverse printed Polyethylene using conventional solvent based inks. 50 micrometers (µm) thick.

Secondary Film: Clear Polyethylene 50 µm thick.

Both the films were corona treated to a dyne level of 38-40 dynes/cm as measured by dyne pens. Using a Myer rod # 6 the white laminating adhesive as prepared in Example 1 was applied to the primary film. The secondary film was then laminated to it. The laminate was then rolled with a roller to provide good surface contact between the adhesive and the films. Tile laminate was then cured on an ESI pilot EB unit at 140 kV, and 30 kGy.

### Example 3

Primary Film: Reverse printed Polyethylene using conventional solvent based inks. 50 µm thick.

Secondary Film: Clear BOPP 30 µm thick.

Both the films were corona treated to a dyne level of 38-40 dynes/cm as measured by dyne pens. Using a Myer rod # 6 the white laminating adhesive as prepared in Example 1 was applied to the primary film. The secondary film was then laminated to it. The laminate was then rolled with a roller to provide good surface contact between the adhesive and the films. The laminate was then cured on an ESI pilot EB unit at 140 kV, and 30 kGy.

After EB treatment both the laminates were tested for adhesion using standard TEE peel on a 1 inch wide strip. Film tear was observed for both the laminates. The opacity of the laminate was excellent. These examples show that the last down white can be used as a laminating adhesive.

### Example 4 - Formulation of last down white laminating adhesive

| **Product** | **Description** | **Suplier** | **%** |
|---|---|---|---|
| Omnistab IN 535 | Stabilizer | IGM Resins | 0.5 |
| TegoGlide 432 | Wetting Agent | Evonik | 1.0 |
| TegoDispers685 | Dispersing Agent | Evonik | 0.5 |
| TMPTA | Acrylate Monomer | Sartomer | 6.0 |
| TMP(3EO)TA | Acrylate Monomer | Sartomer | 15.0 |
| TPGDA | Acrylate Monomer | Sartomer | 9.0 |
| NPG(2PO)TA | Acrylate Monomer | Sartomer | 18.0 |
| Titanium Dioxide R 902 | Pigment | DuPont | 50.0 |

The laminating adhesive formulation provided in Example 4, when cured with an EB unit at a dose of 3-3.5 Mrads, is expected to provide adhesion to similar and dis-similar films like BOPP, coated PET, PE coex, high barrier based sealant films.

### Example 5 - Formulation of last down white laminating adhesive

| **Product** | **Description** | **Suplier** | **%** |
|---|---|---|---|
| Omnistab IN 535 | Stabilizer | IGM Resins | 0.5 |
| TegoGlide 432 | Wetting Agent | Evonik | 1.0 |
| TegoDispers685 | Dispersing Agent | Evonik | 0.5 |
| TMPTA | Acrylate Monomer | Sartomer | 6.0 |
| TMP(3EO)TA | Acrylate Monomer | Sartomer | 15.0 |
| TPGDA | Acrylate Monomer | Sartomer | 9.0 |
| NPG(2PO)TA | Acrylate Monomer | Sartomer | 12.0 |
| Acid functional | Tri acrylate monomer | Sartomer | 6.0 |
| Titanium Dioxide R 902 | Pigment | DuPont | 50.0 |

The laminating adhesive formulation provided in Example 5, when cured with an EB unit at a dose of 3-3.5 Mrads, is expected to provide adhesion to similar and dis similar films like BOPP, coated PET, metallized BOPP, aluminum foil and polyolefinic based sealant films.

The laminating adhesive formulations of Examples 4 and 5 could also be modified by adding a photo initiator, and if necessary making composition adjustments, such that the laminating adhesive formulation is UV curable.

Other embodiments of the disclosure will be apparent to those skilled in the art from consideration of the specification and practice of the disclosure herein. It is intended that tile specification and examples be considered as exemplary only, with a true scope and spirit of the disclosure being indicated by the following claims.

## Claims

1. An adhesive ink composition comprising at least one acrylate monomer, at least one pigment, at least one wetting agent, and at least one dispersing agent.

2. The adhesive ink composition according to claim 1, wherein the at least one pigment is present in an amount ranging from about 40% to about 50%.

3. The adhesive ink composition according to claim 1, further comprising a stabilizer.

4. The adhesive ink composition according to claims 1 to 3, further comprising a photo initiator.

5. The adhesive ink composition according to claims 1 to 4, further comprising an acid functional tri acrylate monomer.

6. The adhesive ink composition according to claims 1 to 5, wherein the composition is EB curable.

7. The adhesive ink composition according to claims 1 to 6 wherein the composition is UV curable.

8. The adhesive ink composition according to claims 1 to 7, wherein the composition exhibits good opacity.

9. The adhesive composition according to claims 1 to 8, wherein the composition exhibits adhesion to films selected from the group consisting of BOPP, coated PET, metallized BOPP, PE coex, high barrier based sealant films, and aluminum foil and polyolefinic based sealant films.
